**Europäisches Patentamt**

(19) **European Patent Office**

**Office européen des brevets**

(11) Publication number: **0 185 120**
**B1**

(12) **EUROPEAN PATENT SPECIFICATION**

(45) Date of publication of patent specification: **20.12.89**

(51) Int. Cl.⁴: **H 04 L 27/10, H 04 L 27/26**

(21) Application number: **84307855.1**

(22) Date of filing: **13.11.84**

(54) Underwater communication.

<table>
<tr><td>

(43) Date of publication of application:
**25.06.86 Bulletin 86/26**

(45) Publication of the grant of the patent:
**20.12.89 Bulletin 89/51**

(84) Designated Contracting States:
**AT BE CH DE FR IT LI LU NL SE**

(56) References cited:
**US-A-3 990 071**
**US-A-4 011 511**
**US-A-4 425 666**
**US-A-4 463 452**

</td><td>

(73) Proprietor: **UNDERWATER STORAGE LIMITED**
**18 Charing Cross Road**
**London WC2 (GB)**

(72) Inventor: **Parker, Bernhard Dollman**
**London Street**
**Swindon Wiltshire SN1 5BW (GB)**

(74) Representative: **Bayliss, Geoffrey Cyril et al**
**BOULT, WADE & TENNANT 27 Furnival Street**
**London EC4A 1PQ (GB)**

</td></tr>
</table>

Courier Press, Leamington Spa, England.

EP 0 185 120 B1

## Description

This invention relates to underwater communication system.

Acoustic waves of sonic or ultrasonic frequency can be transmitted through water for long distances. Refraction effects occur due to changes in the properties of the water for example due to temperature variation and, as a result of this, it commonly occurs that transmission from one point to another may occur over two or more different paths. If these paths have different lengths, or different velocities of propagation, then there is a time delay between the arrival of the signals over the different paths.

The present invention is concerned more particularly with a digital communication system. With a simple train of digital signals, where the presence and absence of a signal indicates 1 and 0 or vice versa, it is necessary at the receiving end to determine both the presence and the absence of a transmitted pulse. Errors can occur due to pulses being repeated by delayed transmission over a second path. Refraction effects may also cause failure to receive a digital pulse.

U.S.—A—4425666 discloses a data encoding and decoding communication system for three frequency FSK modulation wherein binary data bits are sequentially encoded into a ternary system of channel designated "1" "0" and "C", so that a data bit is encoded and transmitted in a C channel whenever it is the same as the previous data bit and wherein a transmission in the C channel is decoded as a continuation of the previous data bit.

U.S.—A—4463452 discloses a modulation/ signal processing technique for acoustic communication in shallow water. Digital information is transmitted in a time expanded version of frequency shift keying where a tone burst at a first frequency represents a logical zero and a tone burst at a second frequency represents a logical one. A signal communication channel employs two frequencies to transmit an identity code as a signal validating and identification method and two frequencies to simultaneously transmit telemetry data.

An object of the present invention is to provide a method of transmitting digital data through water with a high integrity on the reception of the signal.

Two particular difficulties in communicating in an ocean environment are:—

1. Low signal-to-noise ratio of a received signal due to the high ambient noise generated at the signal frequencies. This ambient noise is principally caused by water motion, marine life, passing ships and other man-made noise sources.

2. The echo component caused by the signal bouncing off reflective components on the sea bed and surface reverberation.

This invention provides a method of transmitting digital data through water as acoustic signals comprising the steps of separating and feeding successive digits of a serial input, at the transmitter, each into a selected one of a plurality of channels such that each digit is fed into a different channel from its preceding digit and such that, after a digit has been fed into one channel, the next successive digit is fed into a further channel separate from the channel into which the preceding digit is fed, the further channel being selected in accordance with whether the digit is a 1 or 0 or whether the digit is the same or different from the preceding digit, and then transmitting the signals in the separate channels as acoustic pulses on different sonic or ultrasonic frequencies, and, at the receiving end, receiving the signals of the different sonic or ultrasonic frequency to obtain the digital pulses; wherein four sonic or ultrasonic frequencies are employed, the 1's and 0's of odd digits are fed into one or other of a first pair of channels according to whether the digit to be recorded is a 1 or a 0 and the 1's or 0's of even digits are fed into one or other of a second pair of channels according to whether the digit to be recorded is a 1 or a 0 and in that the receiver includes a logic system which detects the loss of an input signal or the duplication of a signal.

The data-rate can be slowed down to accommodate the echo component. Should the echo component be so severe that any one signal completely merges with the signal following, causing a completely confused signalling situation, the signalling can be made to be discontinuous so that reverberating signals can die before the reception of the next transmitted bit.

For a system to work in this manner, the reception device must be free of any time constraint; a very high integrity of error-detection becomes significant and the use of "ARQ" is important.

The invention also provides apparatus for transmitting digital data through water from a transmitting station to a receiving station in which the transmitter includes means for separating and feeding digits of input serial form into a selected one of a plurality of channels, such that each digit is fed into a different channel from its preceding digit and such that, after a digit has been fed into one channel, the next successive digit is fed into one or other of two further channels separate from the channel into which the preceding digit is fed, the further channel being selected in accordance with whether the digit is a 1 or a 0 or whether the digit is the same or different from the preceding digit, means for radiating the digits from the various channels as pulses of different sonic or ultrasonic frequencies for the various channels and, at the receiving station, means for receiving the sonic or ultrasonic frequencies on the various channels and demodulating the received signals to obtain digit pulses, wherein the transmitter means has four channels to which digital data is fed by said separating and feed means and in that logic means is provided in the receiving means for checking that one digit is received from either the first or second channel and the next digit from either the third or fourth channel.

Such checking system may be arranged, after receiving a pulse on one channel, to disregard any further pulses on that channel until the appropriate reception has occurred on other channels. It is thus readily possible to correct for the effects of transmission over multiple paths for a one-way or a two-way communication link between moving and/or fixed locations under water. In many circumstances, it is convenient to have part of a communication link utilising acoustic waves in water and part of the link making use of radio signals; in this case a transducer device, carried on a buoy or other floating or fixed object or on a dunking buoy, may be provided to receive radio signals and to convert them into appropriate acoustic signals or vice versa. It will be appreciated that the encoding of digital data into three or four channels for transmission using acoustic waves or the combination of signals received on three or four different frequency acoustic waves into serial form might be effected at the location of the transducer or may in some cases more conveniently be effected elsewhere such as for example at the remote end of the radio portion of the link.

The radio-to-sonar or sonar-to-radio link may comprise a simple modulation translator e.g. radio-to-sonar or sonar-to-radio translator. Because of the differing data rates possible for the sonar and radio links, it may be preferred however to employ a data store and interface for forwarding the data.

In any of these arrangements, the use of the three or four channels as described above for acoustic transmission through water enables a very great improvement to be obtained in the underwater communication despite instabilities in the transmission path, the occurrence of multiple transmission paths and interference due to transients.

The data is preferably transmitted in blocks of predetermined length, i.e. having a predetermined number of possible digits. Block or interblock markers may be employed to bracket the data stream or streams. This enables a receiver, by checking these markers, to recognise message blocks and to ignore noise when no data is being transmitted.

The following is a description of one embodiment of the invention, reference being made to the accompanying drawings in which:—

Figure 1 is a diagram illustrating a communication link between a control station and an underwater weapon;

Figure 2 illustrates part of an acoustic transmitting system for transmitting serial digital data by acoustic waves through water; and

Figure 3 illustrates part of a receiving system for receiving signals transmitted by the transmitter of Figure 2.

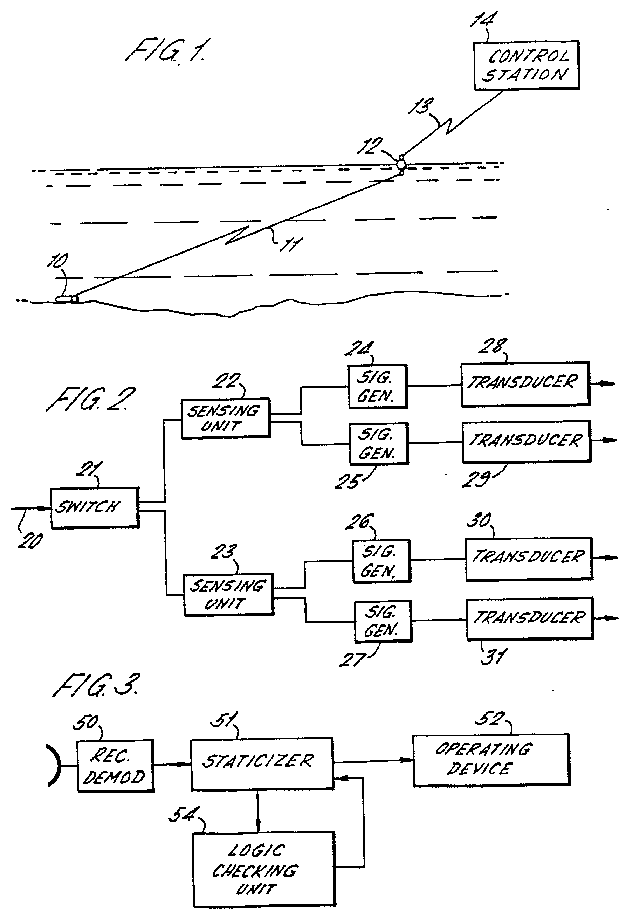

Referring to Figure 1 there is shown diagrammatically an underwater weapon 10 which might typically be located on or buried within the sea bed and which is controlled via a communication link including an underwater path 11 between the weapon and a transducer station 12 typically located on a buoy. From the transducer station 12 communication is effected over a radio link between that station and a control station 14 which may be a fixed land based station or may be a mobile station for example a ship or aircraft. The communication link may be a two-way link or a one-way link depending on the requirements of the weapon system.

The present invention is concerned more particularly with the underwater link 11 but it will be appreciated that certain of the coding or decoding operations might be effected at the control station 14 rather than at the transducer station 12 and, in this case, the appropriate signals would have to be transmitted over the radio link as well as over the acoustic link through the sea.

In the following description referring to Figures 2 and 3, it will be assumed however that digital data in serial form at the transmitting station is to be transmitted over an acoustic link to a receiving station and there converted back into digital data in serial form.

Referring to Figure 2, the input data on a line 20 is fed to a first switching device 21 which operates to feed alternate units of the digital information, as short duration pulses, to two sensing units 22, 23 so that odd digits (i.e. the first, third, fifth etc.) in the serial input are fed to the sensing unit 22 whilst even digits (i.e. the second, fourth etc.) are fed to the sensing unit 23. The sensing units 22, 23 are responsive to the digital values of the input digit and the sensing unit 22 feeds 0's as pulses to modulate a first acoustic signal generator 24 generating signals of sonic or ultrasonic frequency suitable for transmission along the underwater path 11. The sensing unit 22 feeds 1's as pulses to modulate a second acoustic signal generator 25 operating under different frequency. Likewise the sensing unit 23 feeds 0's as pulses to modulate a third acoustic signal generator 26 and 1's as pulses to modulate a fourth acoustic signal generator 27. The four signal generators 24 to 27 thus provide respectively signals of four different frequencies which are fed to transducers 28 to 31 respectively to radiate the pulse modulated acoustic waves through the water.

In the simple form of apparatus described above, the transmitter has four separate channels and these can be tuned as appropriate to the various different frequencies. It will be appreciated that, by using switchably tuned devices, it would become possible to use common components for the four channels.

At the receiving station shown in Figure 3 the various pulses on different acoustic frequencies will arrive in sequence and are received by a receiver and demodulating unit 50 which provides output pulses in sequence which are fed to a staticiser 51. This may conveniently be a register of the kind described in GB—A—0 852 873. The output from this staticiser is fed to an operating device or data responsive means 52 making use of the received digital data. The output from the staticiser 51 is fed also to a checking unit 54. In one form of checking unit, the output pulses corresponding to the first and second channels, i.e. the odd digits, are fed together to a counter which counter has, after each digit, to be reset before it can count the next digit. The resetting signal is obtained from the digits on the third and fourth channels. It will thus be seen that for example if data is transmitted in groups of a predetermined number of digits, the counter will only count the required number of digits if every odd digit is received and if an even digit is received after each odd digit. This checking thus gives a very high degree of protection against spurious pulses which might arise in the acoustic transmission path and against any momentary or prolonged failure to receive signals, e.g. due to instability of the transmission path. It also provides protection against errors due to a single pulse being received two or more times due to multiple path transmission. In an acoustic transmission system, this possibility of multiple path transmission is of particular significance. The output of the logic unit 54 may be fed back to the staticiser 51. In a simple arrangement, provision is made so that, on receipt of a signal on the first or second channel, input to the staticiser from either of those channels is inhibited until a signal is received on the third or fourth channel and vice versa. For logic checking used where the information is transmitted in groups containing a predetermined number of bits of digital information, the output from the logic unit 54 may be fed to a record or display unit to inhibit the display or recording of incorrect information or to identify failure to receive correct information.

In the foregoing, the digital data has been transmitted using a four channel system. It is alternatively possible to encode the information for use on a three-channel system. One convenient way of so encoding the information operates according to the following rule. If two successive data bits are the same, then the last bit of said two bits is fed into a different channel from the previous two bits and successive bits are fed into different channels. Thus, if the channels are A, B and C, if the first bit is a 1 it is fed for example into channel A. If the second bit is a 0 it is fed to channel B. Hence alternating 1's and 0's are encoded ABABAB. . . .

If two successive bits have the same value the last of these two successive bits is fed to channel C. Thus 10100 becomes ABABC.

The C channel has now become the '0' channel so 10100101 becomes ABABCACA.

Similarly if the number 101001011 is encoded, the output of the three-channel encoder will be ABABCACAB, the B channel now becoming the 1 channel because of the successive 1's.

However, if 1010010111 is encoded the output of the encoder is ABABCACABC rather than ABABCACABA as might have been expected because when two successive equal value bits occur the last of said bits must be fed into a different channel to the channels into which the two preceding bits were fed.

As previously mentioned, it is convenient to employ block or inter-block markers to enable the receiving apparatus to bracket a message block in a data stream or data streams. This enables the receiving apparatus to ignore noise when no data is being transmitted. In an encoding method which is independent of time, one can wait forever if there is a break in transmission. The receiving technique is enhanced if the period of the message is known without taking account of time. This can be readily achieved by a unique signal defining the start of the message and a unique signal definition of the end of message. By cascading different messages with this unique signal between each, an independent integrity check can be made on each message separately. This unique signal can be made, for example, from the components of the four frequency used to encode the message as described above by using a combination such that it cannot be mistaken as part of the message itself, and the message component cannot in turn be mistaken for the beginning or end of block marker. This is achieved as follows:—

In the arrangement described above, there are four combinations of data, which if present during the message period would generate errors. These are:—

An odd "0" followed by an odd "1"
An odd "1" followed by an odd "0"
An even "0" followed by an even "1"
An even "1" followed by an even "0"

These combinations of signals can be used for interblock markers in the following way. The beginning of the message can be defined as even zero followed by an even one. The message then follows starting with its odd component for example an odd zero and ending with an even component for example an even one. The end of message can be defined as an odd zero followed by an odd one. If part of the message start marker is missing then no part of the message can reproduce or be mistaken for the start sequence and even if it did the integrity check placed on the number of characters known to be in the message would show the message to be in error. Likewise if part of the message due to noise were to reproduce the end of message marker or if part of the message is missing before the end of block marker is detected then there will be an error. Thus a block marker cannot be mistaken for part of the message and no part of message mistaken as a block marker, with the remotest possibility of a mistake occurring due to malfunction of the detection equipment, it would not matter as it would have the effect of producing an error in the error detection logic.

## Claims

1. A method of transmitting digital data through water as acoustic signals comprising the steps of separating and feeding successive digits of a serial input, at the transmitter, each into a selected one of a plurality of channels such that each digit is fed into a different channel from its preceding digit and such that, after a digit has been fed into one channel, the next successive digit is fed into a further channel separate from the channel into which the preceding digit is fed, the further channel being selected in accordance with whether the digit is a 1 or 0 or whether the digit is the same or different from the preceding digit, and then transmitting the signals in the separate channels as acoustic pulses on different sonic or ultrasonic frequencies, and, at the receiving end, receiving the signals of the different sonic or ultrasonic frequency to obtain the digital pulses; characterised in that four sonic or ultrasonic frequencies are employed, the 1's and 0's of odd digits are fed into one or other of a first pair of channels according to whether the digit to be recorded is a 1 or 0 and the 1's or 0's of even digits are fed into one or other of a second pair of channels according to whether the digit to be recorded is a 1 or a 0 and in that the receiver includes a logic system which detects the loss of an input signal or the duplication of a signal.

2. A method as claimed in Claim 1, characterised in that at the receiver, the pulses received in succession from the various different channels are combined into serial form.

3. A method as claimed in Claim 2, characterised in that the receiver includes a logic system to detect the loss of an input signal or the duplication of a signal.

4. A method as claimed in any of the preceding claims, characterised in that block or inter-block markers are transmitted to indicate the start or start and end of a message block containing a predetermined number of message data digits.

5. Apparatus for transmitting digital data through water from a transmitting station (Figure 2) to a receiving station (Figure 3) in which the transmitter includes means (21, 22, 23) for separating and feeding digits of input serial form into a selected one of a plurality of channels, such that each digit is fed into a different channel from its preceding digit and such that, after a digit has been fed into one channel, the next successive digit is fed into one or other of two further channels separate from the channel into which the preceding digit is fed, the further channel being selected in accordance with whether the digit is a 1 or a 0 or whether the digit is the same or different from the preceding digit, means (24, 25, 26, 27) for radiating the digits from the various channels as pulses of different sonic or ultrasonic frequencies for the various channels and, at the receiving station, means (50) for receiving the sonic or ultrasonic frequencies on the various channels and demodulating the received signals to obtain digit pulses, characterised in that the transmitter means has four channels to which digital data is fed by said separating and feed means and in that logic means (54) is provided in the receiving means for checking that one digit is received from either the first or second channel and the next digit from either the third or fourth channel.

6. Apparatus as claimed in Claim 5, characterised in that the said receiving means (Figure 3) pulses received in succession from the various different channels are combined into serial form.

7. Apparatus as claimed in Claim 6, characterised in that said logic means are arranged, after receiving a pulse on one channel, to disregard any further pulses on that channel until the appropriate reception has occurred on other channels.

**Patentansprüche**

1. Verfahren zum Übertragen digitaler Daten durch Wasser als akustische Signale, welches die Schritte aufweist, gemäß denen aufeinanderfolgende Ziffern eines seriellen Eingangs an dem Transmitter getrennt und jeweils in einen gewünschten Kanal einer Mehrzahl von Kanälen derart zugeführt werden, daß jede Ziffer im Vergleich zur vorangehenden Ziffer einem unterschiedlichen Kanal derart zugeführt wird, daß nach der Zuführung einer Ziffer zu einem Kanal die nächste, darauffolgende Ziffer einem weiteren Kanal zugeführt wird, der von dem ersten Kanal getrennt ist, dem die vorangehende Ziffer zugeführt worden ist, wobei der weitere Kanal in Abhängigkeit davon gewählt wird, ob die Ziffer eine 1 oder 0 ist, oder ob die Ziffer die gleiche oder eine unterschliedliche Ziffer zu der vorangehenden Ziffer ist, und dann die Signale in den gesonderten Kanälen als akustische Impulse auf unterschiedlichen Schall- oder Ultraschallfrequenzen übertragen und am Empfangsende die Signale mit unterschiedlicher Schall- oder Ultraschallfrequenz empfangen werden, um die digitalen Impulse zu erhalten, dadurch gekennzeichnet, daß vier Schall- oder Ultraschallfrequenzen eingesetzt werden, die Einsen oder Nullen von ungeraden Ziffern dem einen oder anderen eines ersten Paars von Kanälen in Abhängigkeit davon zugeführt werden, ob die aufzuzeichnende Ziffer eine 1 oder eine 0 ist, und die Einsen oder Nullen von geradzahligen Ziffern dem einen oder dem anderen eines zweiten Paars von Kanälen in Abhängigkeit davon zugeführt werden, ob die aufzuzeichnende Ziffer eine 1 oder eine 0 ist, und daß der Empfänger ein logisches System enthält, das den Verlust eines Eingangssignals oder die Duplizierung eines Signals erkennt.

2. Verfahren nach Anspruch 1, dadurch gekennzeichnet, daß am Empfänger die Impulse, die in Aufeinanderfolge von den verschiedenen unterschiedlichen Kanälen empfangen wurden, zu einer seriellen Form verknüpft werden.

3. Verfahren nach Anspruch 2, dadurch gekennzeichnet, daß der Empfänger ein logisches System enthält, um den Verlust eines Eingangssignales oder die Duplizierung eines Signales zu erkennen.

4. Verfahren nach einem der vorangehenden Ansprüche, dadurch gekennzeichnet, daß die Block- oder Blocklücken-Markierungen übertragen werden, um den Beginn oder den Beginn und das Ende eines Nachrichtenblocks zu bezeichnen, der eine vorbestimmte Anzahl von Nachrichtendatenziffern enthält.

5. Vorrichtung zum Übertragen digitaler Daten durch Wasser von einer Übertragungsstation (Fig.

2) zu einer Empfangsstation (Fig. 3), bei der der Transmitter eine Einrichtung (21, 22, 23) enthält, welche die Ziffern des Eingangs in serieller Form auf einen gewünschten Kanal einer Vielzahl von Kanälen aufteilt und diesem derart zuführt, daß jede Ziffer einem unterschiedlichen Kanal im Vergleich zu der vorangehenden Ziffer zugeführt wird, daß nach der Zuführung einer Ziffer zu einem Kanal die nächste, darauffolgende Ziffer dem einen oder dem anderen von zwei weiteren Kanälen zugeführt wird, der von dem Kanal gesondert ist, dem die vorangehende Ziffer zugeführt worden ist, wobei der weitere Kanal in Abhängigkeit davon gewählt wird, ob die Ziffer eine 1 oder eine 0 ist, oder ob die Ziffer die gleiche oder eine andere im Vergleich zu der vorangehenden Ziffer ist, die Vorrichtung ferner eine Einrichtung (24, 25, 26, 27) zum Aussenden der Ziffern von den unterschiedlichen Kanälen als Impulse von unterschiedlichen Schall- oder Ultraschallfrequenzen für die unterschiedlichen Kanäle und an der Empfangsstation eine Einrichtung (50) zum Empfangen der Schall- oder Ultraschallfrequenzen an den unterschiedlichen Kanälen und zum Demodulieren der empfangenen Signale enthält, um Ziffernimpulse zu erhalten, dadurch gekennzeichnet, daß die Übertragungseinrichtung vier Kanäle hat, denen digitale Daten mit Hilfe der Trenn- und Zufuhreinrichtung zugeführt werden und daß eine logische Einrichtung (54) in der Empfangseinrichtung vorgesehen ist, welche prüft, ob eine Ziffer entweder von dem ersten oder dem zweiten Kanal empfangen wurde und die nächste Ziffer entweder von dem dritten oder dem vierten Kanal empfangen wurde.

6. Vorrichtung nach Anspruch 5, dadurch gekennzeichnet, daß die Empfangseinrichtung (Fig. 3), welche Impulse in Aufeinanderfolge von den verschiedenen, unterschiedlichen Kanälen empfängt, diese zu einer seriellen Form verknüpft.

7. Vorrichtung nach Anspruch 6, dadurch gekennzeichnet, daß die logische Einrichtung derart ausgelegt ist, daß man nach dem Empfang eines Impulses auf einem Kanal alle weiteren Impulse auf diesem Kanal unberücksichtigt läßt, bis man einen geeigneten Empfang auf den anderen Kanälen erhalten hat.

**Revendications**

1. Un procédé de transmission de données numériques dans l'eau, sous la forme de signaux acoustiques, comprenant les opérations suivantes: séparation et entrée dans l'émetteur des chiffres successifs d'une information d'entrée série, chacun dans un canal sélectionné parmi une pluralité de canaux, de façon que chaque chiffre soit appliqué à un canal différent de celui du chiffre qui le précède, et de façon qu'après qu'un chiffre a été appliqué à un canal, le chiffre immédiatement suivant soit appliqué à un canal ultérieur distinct du canal auquel le chiffre précédent est appliqué, le canal ultérieur étant sélectionné selon que le chiffre est un 1 ou un 0, ou selon que le chiffre est identique au chiffre précédent ou est différent de celui-ci, et transmission des signaux dans les canaux séparés sous la forme d'impulsions acoustiques, sur différentes fréquences sonores ou ultrasonores et, à l'extrémité réceptrice, réception des signaux des différentes fréquences sonores ou ultrasonores, pour obtenir les impulsions numériques; caractérisé en ce qu'on utilise quatre fréquences sonores ou ultrasonores, les 1 et les 0 de chiffres impairs sont appliqués à un canal ou l'autre parmi une première paire de canaux, selon que la chiffre à enregistrer est un 1 ou un 0, et les 1 ou les 0 de chiffres pairs sont appliqués à un canal ou l'autre d'une seconde paire de canaux, selon que le chiffre à enregistrer est un 1 ou un 0, et en ce que le récepteur comprend un système logique qui détecte la perte d'un signal d'entrée ou la duplication d'un signal.

2. Un procédé selon la revendication 1, caractérisé en ce que dans le récepteur, les impulsions reçues en succession à partir de divers canaux différents sont combinées sous forme série.

3. Un procédé selon la revendication 2, caractérisé en ce que le récepteur comprend un système logique qui détecte la perte d'un signal d'entrée ou la duplication d'un signal d'entrée.

4. Un procédé selon l'une quelconque des revendications précédentes, caractérisé en ce que des marqueurs de blocs ou d'intervalles entre blocs sont émis pour indiquer le début ou le début et la fin d'un bloc de message contenant un nombre prédéterminé de chiffres de données de message.

5. Appareil pour transmettre des données numériques dans l'eau, d'une station émettrice (figure 2) vers une station réceptrice (figure 3), dans lequel l'émetteur comprend des moyens (21, 22, 23) pour séparer des chiffres d'une information d'entrée série et pour appliquer ces chiffres à un canal sélectionné parmi une pluralité de canaux de façon que chaque chiffre soit appliqué à un canal différent de celui du chiffre qui le précède, et de façon qu'après qu'un chiffre a été appliqué à un canal, le chiffre immédiatement suivant soit appliqué à un canal ou l'autre parmi deux canaux ultérieurs, distincts du canal auquel le chiffre précédent a été appliqué, le canal ultérieur étant sélectionné selon que le chiffre est un 1 ou un 0, ou selon quel le chiffre est le même que le chiffre précédent ou est différent de celui-ci, des moyens (24, 25, 26, 27) destinés à émettre de façon radiative les chiffres des divers canaux, sous la forme d'impulsions de différentes fréquences sonores ou ultrasonores pour les divers canaux, et dans lequel la station réceptrice comporte des moyens (50) destinés à recevoir les fréquences sonores ou ultrasonores des divers canaux et à démoduler les signaux reçus pour obtenir des impulsions numériques, caractérisé en ce que les moyens émetteurs comportent quatre canaux auxquels des données numériques sont appliquées par les moyens de séparation et d'application de chiffres, et en ce que des moyens logiques (54) sont incorporés dans les moyens de réception pour contrôler qu'un chiffre est reçu à partir du premier ou du second canal et que le chiffre suivant est reçu à partir du troisième ou du quatrième canal.

6. Appareil selon la revendication 5, caractérisé en ce que dans les moyens de réception (figure 3), des impulsions qui sont reçues successivement à partir des différents canaux sont combinées sous une forme série.

7. Appareil selon la revendication 6, caractérisé en ce que les moyens logiques sont conçus après la réception d'une impulsion sur un canal, de façon à rejeter toutes impulsions supplémentaires sur ce canal, jusqu'à ce que la réception appropriée ait eu lieu sur d'autres canaux.

FIG. 1.

CONTROL
STATION
*14*

*13*

*12*

*11*

*10*

FIG. 2.

SWITCH
*21*

*20*

SENSING
UNIT
*22*

SENSING
UNIT
*23*

SIG.
GEN.
*24*

SIG.
GEN.
*25*

SIG.
GEN.
*26*

SIG.
GEN.
*27*

TRANSDUCER
*28*

TRANSDUCER
*29*

TRANSDUCER
*30*

TRANSDUCER
*31*

FIG. 3.

REC.
DEMOD
*50*

STATICIZER
*51*

OPERATING
DEVICE
*52*

LOGIC
CHECKING
UNIT
*54*